(19) Europäisches Patentamt / European Patent Office / Office européen des brevets

(11) **EP 4 578 736 A1**

(12) **EUROPEAN PATENT APPLICATION**

(43) Date of publication:
**02.07.2025 Bulletin 2025/27**

(21) Application number: **24222811.2**

(22) Date of filing: **23.12.2024**

(51) International Patent Classification (IPC):
*B60R 1/00* (2022.01)   *B60R 1/20* (2022.01)
*B60R 1/22* (2022.01)   *B60R 1/23* (2022.01)
*G02B 3/04* (2006.01)   *G02B 3/10* (2006.01)
*G02B 13/06* (2006.01)   *G06T 3/4038* (2024.01)
*G06T 3/4053* (2024.01)   *H04N 17/00* (2006.01)
*H04N 23/63* (2023.01)   *H04N 23/90* (2023.01)
*H04N 23/95* (2023.01)

(52) Cooperative Patent Classification (CPC):
H04N 17/002; B60R 1/00; B60R 1/20; B60R 1/22;
B60R 1/23; G02B 13/06; G06T 3/4038;
H04N 23/633; H04N 23/90; H04N 23/95;
H04N 23/951; G02B 3/04; G02B 3/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.12.2023 JP 2023218673**

(71) Applicant: **CANON KABUSHIKI KAISHA
Tokyo 146-8501 (JP)**

(72) Inventor: **HORIKAWA, Kouji
Tokyo, 146-8501 (JP)**

(74) Representative: **TBK
Bavariaring 4-6
80336 München (DE)**

(54) **DISPLAY CONTROL DEVICE, DETERMINATION DEVICE, DETERMINATION METHOD, AND STORAGE MEDIUM**

(57)    A display control device comprising: an image acquisition unit configured to acquire images from a plurality of imaging units each configured to capture an optical image having a low-resolution region and a high-resolution region; an image combining unit configured to combine the images to generate a peripheral image; and a display control unit configured to display high-resolution regions of the plurality of imaging units in a superimposed manner on the peripheral image.

FIG. 1

EP 4 578 736 A1

**Description**

BACKGROUND OF THE INVENTION

Field of the Invention

The present invention relates to a display control device, a determination device, a determination method, and a storage medium.

Description of the Related Art

Conventionally, as a unit that captures and displays surrounding video images in a vehicle, there is a surrounding view display device that serves . The surrounding view display device captures surrounding video images by using a plurality of imaging devices and combines the images to generate one surrounding image. When the video images are combined, calibration is necessary for aligning a combining position between the imaging devices.

The calibration is performed by using two imaging devices to capture images of the same calibration sheet (calibration index) , detecting feature points, and combining the images at a position where the feature points overlap with each other in the captured video images. However, the accuracy of the calibration depends on the resolution of the feature points in the video image that has been captured for use in this combining, and thus caution is required.

PCT International Publication No. WO 01/028250 discloses an invention in which two imaging devices are combined to capture images in order to image the left and right directions in the forward direction.

However, PCT International Publication No. WO 01/028250 only discloses the arrangement position of the two imaging devices, and there is a drawback in which the number of imaging devices increase when a surrounding view is displayed, which leads to an increase in cost.

When calibration for a conventional surrounding view display device is performed, the resolution of the portion where the feature points are detected becomes a problem. The region where the feature points are detected may be a region with large distortion or a region with low resolution depending on the installation position or the image height characteristics of the imaging device. When the images are combined in such a region, even if the images at a short distance match, there is the problem that that, for example, a double image or the disappearance of an image will occur due to an error at a long distance.

SUMMARY OF THE INVENTION

A display control device according to an embodiment of the present invention comprises: at least one processor or circuit configured to function as: an image acquisition unit configured to acquire images from a plurality of imaging units each configured to capture an optical image having a low resolution region and a high resolution region; an image combining unit configured to combine the images to generate a peripheral image; and a display control unit configured to display high-resolution regions of the plurality of imaging units in a superimposed manner on the peripheral image.

Further features of the present invention will become apparent from the following description of embodiments with reference to the attached drawings.

BRIEF DESCRIPTION OF THE DRAWINGS

Fig. 1 is a schematic view illustrating an example of a use environment for a surrounding view display device according to all embodiments of the present invention.
Fig. 2 is a block diagram illustrating an example of a configuration of the surrounding view display device according to all embodiments of the present invention.
Fig. 3A and Fig. 3B are diagrams showing examples of optical characteristics of a peripheral high resolution lens according to the present invention.
Fig. 4A and Fig. 4B show examples of optical characteristics of a central high resolution lens according to the present invention.
Fig. 5 is a flowchart showing an example of calibration processing that is executed by a processing unit 213 according to the first embodiment of the present invention.
Fig. 6 is a flowchart showing an example of calibration processing that is executed by the processing unit 213 according to the second embodiment of the present invention.
Fig. 7 is a diagram showing a display example according to all embodiments of the present invention.

FIG. 8 is a diagram showing a display example according to the first embodiment of the present invention.

DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

<First Embodiment>

The calibration in a surrounding view display device according to the first embodiment of the present invention will be explained in detail. The surrounding view display device is an example of a display control device. The surrounding view display device is an example of a determination device.

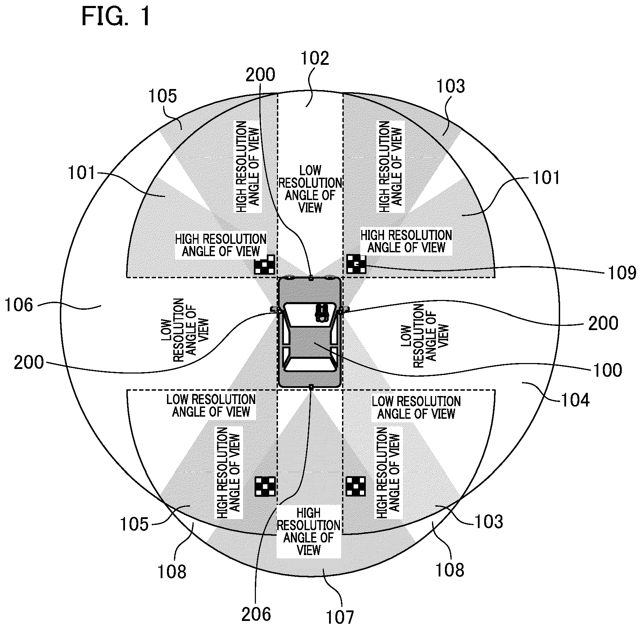

FIG. 1 is a schematic view illustrating a use environment for the surrounding view display device according to all embodiments of the present invention. A vehicle 100 is a vehicle that is operated by a user and in this case is an automobile. In the first embodiment, peripheral high-resolution imaging devices 200 are installed on the front, the right side, and the left side of the vehicle 100. The surrounding view display device is disposed in the vehicle 100.

The peripheral high-resolution imaging device 200 (this may also be referred to as a "front imaging device") that is installed on the front side of the vehicle 100 images a high-resolution region 101 and a low-resolution region 102. The high-resolution region 101 is a region where the peripheral high-resolution imaging device 200 that is installed on the front side of the vehicle 100 captures images at a high resolution. The low-resolution region 102 is a region where the peripheral high-resolution imaging device 200 that is installed on the front side of the vehicle 100 captures an image at a low resolution that is lower than that of the high-resolution region 101.

The peripheral high-resolution imaging device 200 (this may also be referred to as a "right-side imaging device") that is installed on the right side of the vehicle 100 images a high-resolution region 103 and a low-resolution region 104. The high-resolution region 103 is a region where the peripheral high-resolution imaging device 200 that is installed on the right side of the vehicle 100 captures an image at a high resolution. The low-resolution region 104 is a region where the peripheral high-resolution imaging device 200 that is installed on the right side of the vehicle 100 captures an image at a low resolution that is lower than that of the high-resolution region 103.

The periphery high-resolution imaging device 200 (may be referred to as a "left side imaging device") that is installed on the left side of the vehicle 100 images a high-resolution region 105 and a low-resolution region 106. The high-resolution region 105 is a region where the peripheral high-resolution imaging device 200 that is installed on the left side of the vehicle 100 captures an image at a high resolution.

The low-resolution region 106 is a region where the peripheral high-resolution imaging device 200 that is installed on the left side of the vehicle 100 captures an image at a resolution that is lower than that of the high-resolution region 105.

Additionally, in the first embodiment, a central high-resolution imaging device 206 (may be referred to as a "rear imaging device") is installed on the rear side of the vehicle 100. The central high-resolution imaging device 206 that installed on the rear side captures an image of a high-resolution region 107 and a low-resolution region 108.

The high-resolution region 107 is a region where the central high-resolution imaging device 206 that is installed on the rear side of the vehicle 100 captures an image at a high resolution. The low-resolution region 108 is a region where the central high-resolution imaging device 206 that is installed on the rear side of the vehicle 100 captures an image at a low resolution that is lower than that of the high-resolution region 107.

In order to combine the captured images, the surrounding view display device according to the first embodiment captures images of a calibration sheet 109, which has been installed at a location where there is overlap between adjacent imaging devices, and extracts feature points.

The location where the calibration sheet 109 is disposed in the first embodiment is as will be described below. The calibration sheet 109 is disposed int a location where the high-resolution region 101 in the front imaging device and the high-resolution region 103 in the right-side imaging device overlap with each other.

Additionally, the calibration sheet 109 is disposed in a location where the high-resolution region 101 in the front imaging device and the high-resolution region 105 in the left side imaging device overlap with each other. Additionally, the calibration sheet 109 is disposed in a location where the high-resolution region 103 in the right-side imaging device and the high-resolution region 107 in the rear imaging device overlap with each other.

Additionally, the calibration sheet 109 is disposed in a location where the high-resolution region 105 in the left side imaging device and the high-resolution region 107 in the rear imaging device overlap with each other.

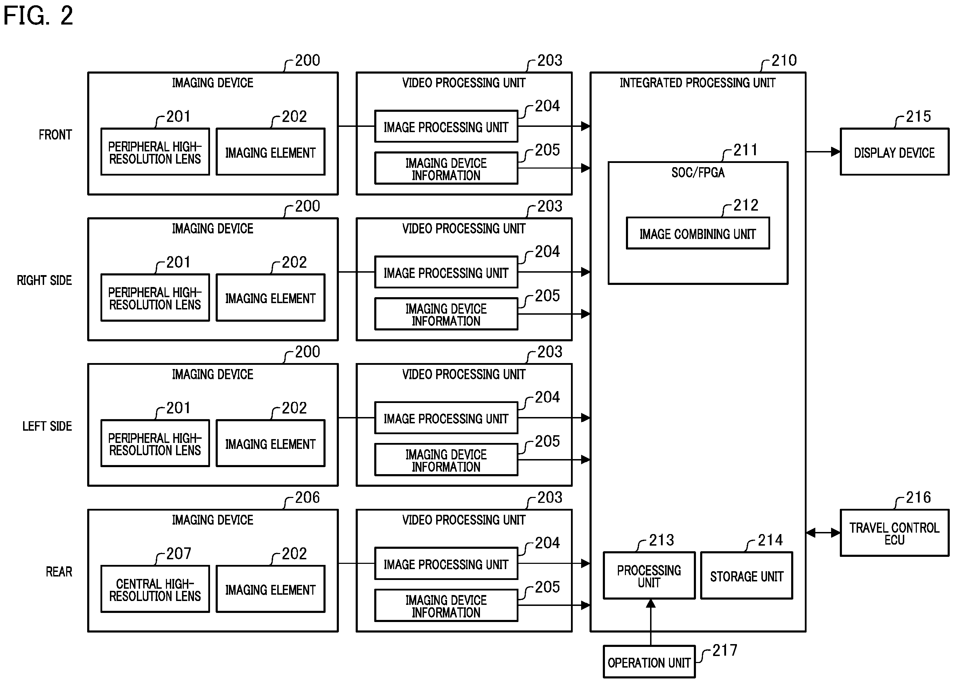

FIG. 2 is a block diagram of the surrounding view display device according to all embodiments of the present invention. The peripheral high-resolution imaging device 200 has a peripheral high-resolution lens 201 and an imaging element 202. Additionally, the central high-resolution imaging device 206 has a central high-resolution lens 207 and the imaging element 202. The peripheral high-resolution imaging device 200 and the central high-resolution imaging device 206 are imaging devices that capture image information around the vehicle 100.

The peripheral high-resolution imaging device 200 converts an optical image of a subject captured by the peripheral high- resolution lens 201 into an image signal using the imaging element 202, and performs analog-to-digital conversion and the like in order to generate image data.

The central high-resolution imaging device 206 converts an optical image of a subject captured by the peripheral high-resolution lens 201 into an image signal using the imaging element 202, and performs analog-to-digital conversion and the like in order to generate image data.

The imaging element 202 may be a photoelectric conversion element represented by a CCD, a CMOS, and the like. CCD is an abbreviation of "Charge Coupled Device". CMOS is an abbreviation of "Complementary Metal-Oxide-Semiconductor".

A video processing unit 203 is configured by an image processing unit 204 and imaging device information 205. In the image processing unit 204, various image processing such as white balance adjustment, WDR correction, gamma correction, and LUT are performed on the image data generated by the imaging element 202. WDR is an abbreviation of "Wide Dynamic Range". LUT is an abbreviation of "Look Up Table".

The imaging device information 205 holds information relating to the peripheral high-resolution imaging device 200 and the central high-resolution imaging device 206 to which the video processing unit 203 is connected such as a camera position, a camera angle, an angle of view, a high-resolution region in an imaging range, and a low-resolution region in an imaging range. The imaging device information 205 can also be referred to as camera information.

An integrated processing unit 210 is configured by an SOC/FPGA 211, the processing unit 213, and a storage unit 214. SOC is an abbreviation of "System On a Chip". FPGA is an abbreviation of "Field Programmable Gate Array". The SOC/FPGA 211 includes an image combining unit 212.

The image data from all of the image processing units 204 are input to the SOC/FPGA 211 in the integrated processing unit 210. The SOC/FPGA 211 can also be referred to as an image acquiring unit. In the image combining unit 212 in the SOC/FPGA 211, the feature points of the calibration sheet 109 are extracted from the image data, and the corresponding feature points are used in order to combine all of the image data into one piece of surrounding image data.

The SOC/FPGA 211 can also be referred to as a feature point extraction unit. The image combining unit 212 can also be referred to as an image combining unit that generates a peripheral image.

The processing unit 213 is a CPU that performs calculation and control. CPU is an abbreviation of "Central Processing Unit". The storage unit 214 includes a ROM and a RAM that are main storage devices. ROM is an abbreviation of "Read Only Memory".

RAM is an abbreviation of "Random Access Memory". The ROM in the storage unit 214 stores basic settings data and a series of programs related to the first embodiment. The programs are executed by, for example, the CPU in the processing unit 213.

During calibration, a display device 215 displays images from the peripheral high-resolution imaging device 200 and the central high-resolution imaging device 206, and superimposes and displays a high-resolution region and a low-resolution region from each imaging device based on the information from the imaging device information 205.

The integrated processing unit 210 can also be said to be a display control unit for the display device 215. Additionally, the integrated processing unit 210 determines whether or not the feature points of the calibration sheet 109 are present in the high-resolution region in each imaging device. That is, the integrated processing unit 210 can also be said to be a determination unit. Additionally, after the calibration is completed, the display device 215 displays the surrounding image data to show the surrounding image data to the user.

A travel control ECU 216 provides a notification of a state of the vehicle 100 to the integrated processing unit 210, and controls the vehicle 100 based on an operation from the user and information from the integrated processing unit 210.

An operation unit 217 transmits an operation from the user such as a transition to a calibration mode or display of an omnidirectional image to the processing unit 213.

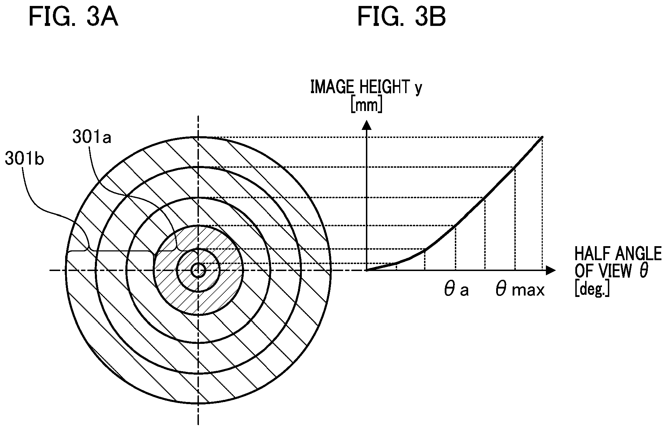

Next, the optical characteristics of the peripheral high-resolution lens 201 will be explained with reference to Fig. 3A and Fig. 3B using the peripheral high-resolution imaging device 200 that is installed on the front side of the vehicle 100 as an example. Fig. 3A and Fig. 3B are optical characteristic diagrams of the peripheral high-resolution lens according to the present invention.

The peripheral high-resolution lens 201 is an optical system in which an imaging magnification is different between a low-resolution region 102 in the front imaging device and the high-resolution region 101 in the front imaging device, which is larger than the low-resolution region 102. An imaging surface (light receiving surface) in the imaging element 202 of the peripheral high-resolution imaging device 200 includes a first region 301a that images an object included in the low-resolution region 102 in the front imaging device.

Additionally, the imaging surface (light receiving surface) of the imaging element 202 of the peripheral high-resolution imaging device 200 includes a second region 301b in which an object that is included in the high-resolution region 101 of the front imaging device is imaged. At this time, the number of pixels per unit angle of view in the second region 301b is larger than the number of pixels per unit angle of view in the first region 301a.

In other words, the resolution for the second angle of view (the angle of view at which the second region 301b is imaged) of the peripheral high-resolution imaging device 200 is higher than the resolution for the first angle of view (the angle of view at which the first region 301a is imaged).

The optical characteristics of the peripheral high-resolution lens 201 will be explained with reference to Fig. 3A and Fig. 3B. Fig. 3A is a diagram illustrating the image heights y at each of the half angles of view on the imaging surface (light receiving surface) of the imaging element 202 of the peripheral high-resolution imaging device 200 in the form of contour lines. Fig. 3B is a diagram illustrating the relationship between the half angle of view θ and the image height y (projection characteristics of the peripheral high-resolution lens 201) in the first quadrant of Fig. 3A.

As shown in Fig. 3B, the peripheral high-resolution lens 201 is configured such that the projection characteristic y (Θ) thereof is different between an angle of view that is less than a predetermined half angle of view θa and an angle of view that is equal to or greater than the half angle of view θa. Accordingly, the peripheral high-resolution lens 201 is configured such that, when the amount of increase in the image height y with respect to the half angle of view θ per unit is set as the resolution, the resolution thereof is different depending on the angle of view (region on the light receiving surface of the imaging device).

This local resolution can be expressed by a differential value dy (θ)/d θ at the half angle of view θ of the projective property y (θ). For example, it can be said that the resolution becomes higher as the gradient of the projective property y (Θ) in Fig. 3B becomes larger. Additionally, Fig. 3A shows that the resolution becomes higher as the interval of the contour lines of the image heights y at each of the half angles of view becomes larger.

The peripheral high-resolution lens 201 of the first embodiment has a projection characteristic in which an increase rate of the image heights y (the gradient of the projection characteristic y(θ) in Fig. 3B) is small in the central region near the optical axis, and the increase rate of the image heights y increases as the angle of view increases in the peripheral region outside of the central region.

In Fig. 3A, the first region 301a that includes the center corresponds to an angle of view that is less than the half angle of view θa, and the second region 301b outside of the first region 301a corresponds to an angle of view that is equal to or greater than the half angle of view θa. Additionally, the angle of view that is less than the half angle of view θa corresponds to the low-resolution region 102 in the front imaging device in Fig. 1, and the angle of view that is equal to or greater than the half angle of view θa corresponds to the high- resolution region 101 in the front imaging device in Fig. 1.

As described above, the first region 301a is a relatively low-resolution region (lower in resolution than the second region 301b). The second region 301b is a relatively high-resolution region (higher in resolution than the first region 301a).

Note that the characteristics as shown in Fig. 3A and Fig. 3B are examples, and the present invention is not limited thereto. For example, the low-resolution region and the high-resolution region of the optical system do not need to be concentrically formed, and each region may have a distorted shape.

Additionally, the center of gravity of the low-resolution region and the center of gravity of the high-resolution region do not need to coincide with each other. Additionally, the center of the low-resolution region and the center of the high-resolution region may be shifted from the center of the light receiving surface of the imaging element. In the optical system of the first embodiment, it is sufficient if the low-resolution region is formed in the vicinity of the optical axis, and the high-resolution region is formed on the peripheral side of the vicinity of the optical axis.

The peripheral high-resolution lens 201 is configured to satisfy the Formula 1 below, where f is the focal length, θ is the half angle of view, y is the image height on the image plane, y (θ) is the projection characteristic that represents the relationship between the image height y and the half angle of view θ, and θ max is the maximum half angle of view of the optical system.

That is, the peripheral high-resolution lens 201 is configured such that the projection characteristic y (Θ) is different from the projection characteristic of the 2ftan (θ / 2) (stereographic projecting method).

$$0.2 < 2 \times f \times \tan(\theta_{max}/2)/y(\theta_{max}) < 0.92$$

... (Formula 1)

In an optical system having such optical characteristics, it is possible to adjust the magnification in the radiation direction with respect to the optical axis by adjusting the projection characteristic y (θ). Accordingly, it is possible to control the aspect ratio in the radial direction and the circumferential direction with respect to the optical axis, and thus it is possible to obtain a high-resolution image in which distortion is reduced in the peripheral region while the angle of view remains wide, unlike in a conventional fisheye lens.

Additionally, it is possible to make the resolution in the second region 301b higher than that the resolution in an optical system that uses the stereographic projection method by satisfying the Formula 1. If the upper limit of the Formula 1 is exceeded, the resolution in the second region 301b will become low and the difference between this resolution and the resolution in the first region 301a will become small, which is not preferable.

Additionally, if the Formula 1 falls below its lower limit, it becomes difficult to satisfactorily correct various aberrations such as field curvature, which is not preferable. Note that the Formula 1 described above is an example, and the optical system in the first embodiment is not limited thereto.

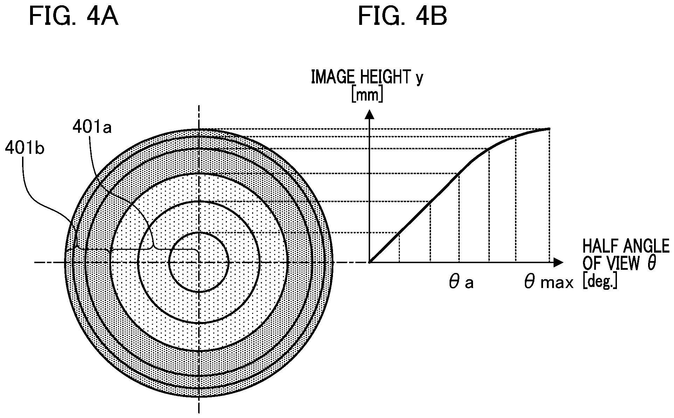

Next, the optical characteristics of the central high-resolution lens 207 in the central high-resolution imaging device 206 that is installed on the rear side of the vehicle 100 will be explained with reference to Fig. 4A and Fig. 4B. Fig. 4A and Fig. 4B are optical characteristic diagrams of the central high-resolution lens according to the present invention. The central high-resolution imaging device 206 has the central high-resolution lens 207 and the imaging element 202.

The central high-resolution lens 207 is an optical system that has different imaging magnifications in the high-resolution region 107 in the rear-side imaging device and in the low-resolution region 108 in the rear-side imaging device, which is larger than the high-resolution region 107.

The imaging surface (light receiving surface) in the imaging element 202 of the central high-resolution imaging device 206 includes a first region 401a in which an object that is included in the high-resolution region 107 in the rear-side imaging device is imaged. The imaging surface (light receiving surface) in the imaging element 202 of the central high-resolution imaging device 206 includes a second region 401b in which an object that is included in the low-resolution region 108 in the rear imaging device is imaged.

At this time, the number of pixels per unit angle of view in the first region 401a is larger than the number of pixels per unit angle of view in the second region 401b excluding the first region 401a. In other words, the resolution at the first angle of view (the angle of view for imaging the first region 401a) of the central high-resolution imaging device 206 is higher than the resolution at the second angle of view (the angle of view for imaging the second region 401b).

The optical characteristics of the central high-resolution lens 207 will be explained with reference to Fig. 4A and Fig. 4B. Fig. 4A is a diagram showing the image heights y at each of the half angles of view on the imaging surface (light receiving surface) in the imaging element 202 of the central high-resolution imaging device 206 in the form of contour lines. Fig. 4B is a diagram showing the relationship between the half angle of view θ and the image height y (projection characteristics of the central high-resolution lens 207) in the first quadrant of Fig. 4A.

As is shown in Fig. 4B, the central high-resolution lens 207 is configured such that the projection property y (Θ) is different for an angle of view that is less than a predetermined half angle of view θa and an angle of view that is equal to or greater than the half angle of view θa. Accordingly, the central high-resolution lens 207 is configured such that the resolution is different depending on the angle of view (region on the light receiving surface of the imaging element) when the amount of increase in the image height y with respect to the half angle of view θ per unit is defined as the resolution.

This local resolution can be expressed by a differential value dy (θ)/d θ at the half angle of view θ of the projection property y (θ). For example, it can be said that the resolution is higher as the gradient of the projective property y (Θ) in Fig. 4B is larger. Additionally, Fig. 4 shows that the resolution is higher as the interval of the contour lines of the image heights y at each of half angles of view is larger.

The first embodiment of the central high-resolution lens 207 has a projection characteristic in which the increase rate of the image height y (the gradient of the projection characteristic y(θ) in Fig. 4B) is large in the center region near the optical axis, and the increase rate of the image height y decreases as the angle of view increases in the peripheral region outside the center region.

In Fig. 4A, the first region 401a that includes the center corresponds to an angle of view that is less than the half angle of view θa, and the second region 401b outside the first region 401a corresponds to an angle of view that is equal to or greater than the half angle of view θa. Additionally, an angle of view that is less than the half angle of view θa corresponds to the high-resolution region 107 in the rear-side imaging device in FIG. 1, and an angle of view that is obtained by combining the angle of view that is less than the half angle of view θa and the angle of view that is equal to or greater than the half angle of view θa corresponds to the low-resolution region 108 in the rear-side imaging device in FIG. 1.

As described above, the first region 401a is a relatively high-resolution region (higher in resolution than the second region 401b). The second region 401b is a relatively low-resolution region (lower in resolution than the first region 401a).

Note that the characteristics that are shown in Fig. 4A and Fig. 4B are examples, and the present invention is not limited thereto. For example, the low-resolution region and the high-resolution region of the optical system do not need to be concentrically formed, and each region may have a distorted shape.

Additionally, the center of the low-resolution region and the center of the high-resolution region do not need to coincide with each other. Additionally, the center of the low-resolution region and the center of the high-resolution region may be shifted from the center of the light receiving surface of the imaging element. In the optical system of the first embodiment, it is sufficient if the high-resolution region is formed in the vicinity of the optical axis, and the low-resolution region is formed on the peripheral side near the optical axis.

The central high-resolution lens 207 is configured such that the projection property y (Θ) thereof is larger than f × θ in the first region 401a (high-resolution region). In this context, f is the focal length of the central high-resolution lens 207.

Additionally, the central high-resolution lens 207 is set such that the projection property y (Θ) in the first region 401a (high-resolution region) is different than the projection property in the second region 401b (low-resolution region).

In a case where θ max is the maximum half angle of view of the central high-resolution lens 207, it is desirable that θ a/θ max, which is the ratio of θa and θ max, is equal to or greater than a predetermined lower limit value, and for example, it is desirable that the predetermined lower limit value is 0.15 to 0.16.

Additionally, θa/θ max, which is the ratio of θa and θ max, is desirably equal to or less than a predetermined upper limit value, and, for example, it is desirable that the predetermined upper limit value is 0.25 to 0.35. For example, in a case where θa is set to 90 °, the predetermined lower limit value is set to 0.15, and the predetermined upper limit value is set to 0.35, θa is desirably determined in a range of 13.5 ° to 31.5 °. However, the above is an example, and the present invention is not limited thereto.

Furthermore, the central high-resolution lens 207 is configured such that the projection characteristic y (Θ) thereof also satisfies the Formula 2 below.

$$1 < \frac{f \times \sin \theta_{max}}{y(\theta_{max})} \leq A$$

... (Formula 2)

In this context, f is the focal length of the central high-resolution lens 207 as described above, and A is a predetermined constant. By setting the lower limit value to 1 as in the Formula 2, in the central high-resolution lens 207, the central resolution can be set to be higher than the resolution of a fisheye lens that uses the orthogonal projection system (y = f × sin θ) having the same maximum imaging height.

By setting the upper limit value to A as in the Formula 2, the central high-resolution lens 207 can maintain advantageous optical performances while obtaining an angle of view that is equivalent to the angle of view t of a fisheye lens. The predetermined constant A may be determined in consideration of the balance between the resolutions of the high-resolution region and the low-resolution region and is desirably set to 1.4 to 1.9. However, the above is an example, and the present invention is not limited thereto.

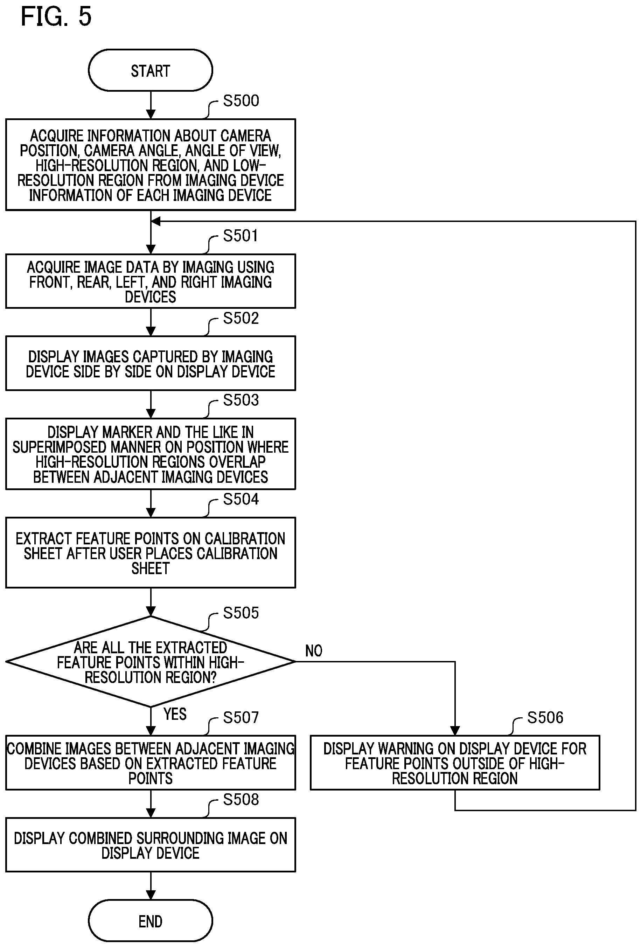

FIG. 5 is a flowchart illustrating an example of calibration processing that is executed by the processing unit 213 according to the first embodiment. In step S500, the processing unit 213 acquires information such as a camera position, a camera angle, an angle of view, a high-resolution region, and a low-resolution region from all of the pieces of the imaging device information 205.

In step 501, the processing unit 213 obtains image data through imaging performed by all of the peripheral high-resolution imaging devices 200 and the central high-resolution imaging device 206.

In step S502, the processing unit 213 displays the captured images side by side on the display device 215.

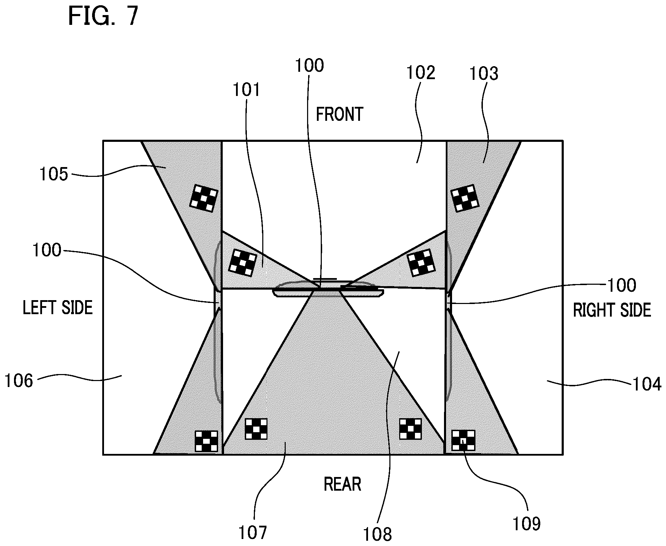

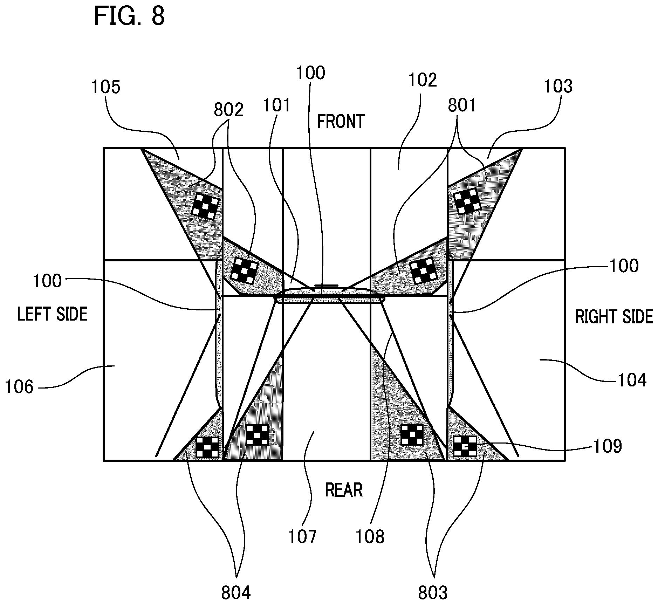

In step S503, the processing unit 213 displays, on the display device 215, a marker and the like in a superimposed manner on a position where the high-resolution regions overlap with each other between the adjacent imaging devices. Fig. 7 and Fig. 8 are examples of the display, and the marker and the like that indicate the high-resolution region are displayed in a superimposed manner on the image captured by each imaging device.

Accordingly, the user can confirm that the calibration sheet 109 is in the high-resolution region. In Fig. 8, a marker and the like are displayed in a superimposed manner in a position where the high-resolution regions of the plurality of imaging devices overlap with each other.

Specifically, a high-resolution region 801 is displayed in gray as a region where the high-resolution region 101 and the high-resolution region 103 overlap with each other. Similarly, a high-resolution region 802 is displayed in gray as a region where the high-resolution region 101 and the high-resolution region 105 overlap with each other.

Similarly, a high-resolution region 803 is displayed in gray as a region in which the high-resolution region 107 and the high-resolution region 103 overlap with each other. Similarly, a high-resolution region 804 is displayed in gray as a region in which the high-resolution region 107 and the high-resolution region 105 overlap with each other. The user places the calibration sheet 109 at a position where the marker and the like are displayed.

In step S504, the processing unit 213 detects that the user has placed the calibration sheet 109 at a position where the marker and the like are displayed from the video image that was obtained by imaging the surroundings of the vehicle 100, and extracts feature points therefrom.

In step S505, the processing unit 213 determines whether or not all of the extracted feature points are included within the high-resolution region. If the processing unit 213 determines that all of the extracted feature points are included within the high-resolution region, the processing for step S507 is executed. If the processing unit 213 determines that any of the extracted feature points is not included in the high-resolution region, the processing for step S505 is executed.

In step S506, the processing unit 213 displays a warning that indicates which feature point is outside of the high-resolution region to the user on the display device 215. Consequently, the user can know how the calibration sheet 109 deviates from the high-resolution region. Then, the process returns to step S501.

In step 507, the processing unit 213 causes the image combining unit 212 to combine the images captured by the adjacent imaging devices based on the positions of the extracted feature points, performs combining processing on all of the image data, and generates a surrounding image.

In step S508, the processing unit 213 causes the display device 215 to display the surrounding image that was generated in step S507.

As was described above, it is possible to construct a more accurate surrounding view display device by performing calibration using the overlapping positions between the high-resolution regions of the imaging devices and combining the image data that was captured at high resolution into one surrounding image.

Although the present invention has been described in detail based on preferred embodiments thereof, the installation positions and the numbers of the peripheral high-resolution imaging devices 200 and the central high-resolution imaging devices 206 are not limited to the installation positions and numbers that have been described in this embodiment, and can be suitably selected and changed. Therefore, the present invention is not limited to these specific embodiments and can be modified in various forms without departing from the gist of the present invention.

<Second Embodiment>

Next, the calibration in a surrounding view display device according to the second embodiment of the present invention will be explained in detail. The surrounding view display device is an example of a display control device. The surrounding view display device is an example of a determination device.

In the second embodiment, since FIG. 1, FIG. 2, FIG. 3, FIG. 4, FIG. 7, and FIG. 8 are similar to those of the first embodiment, these drawings are referred to, and detailed descriptions of each drawing will be omitted.

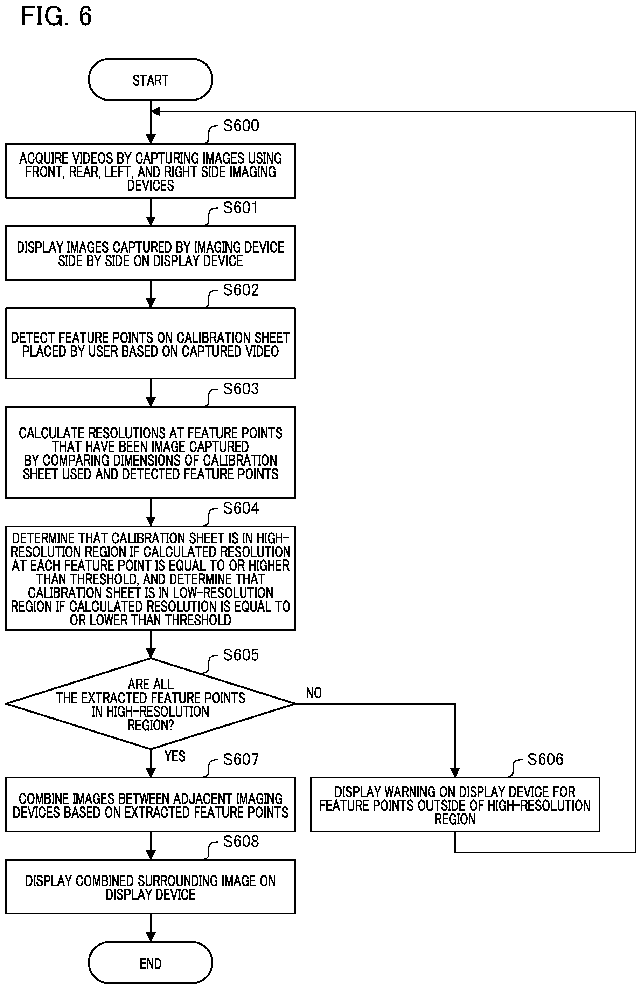

FIG. 6 is a flowchart illustrating an example of the calibration processing that is executed by the processing unit 213 according to the second embodiment of the present invention.

In step S600, the processing unit 213 obtains image data that has been captured by all of the peripheral high-resolution imaging devices 200 and the central high-resolution imaging device 206.

In step S601, the processing unit 213 displays the captured image data side by side on the display device 215. The user places the calibration sheet 109 in the surroundings of the vehicle 100.

In step S602, the processing unit 213 detects that the user has placed the calibration sheet 109 based on the video image that has been obtained by imaging the surroundings of the vehicle 100, and extracts feature points therefrom.

In step S603, the processing unit 213 calculates the resolution based on the number of pixels between the feature points from the dimensions of the calibration sheet 109 that was recorded in the storage unit 214 in advance and the detected feature points. The integrated processing unit 210 in Fig. 2 can also be referred to as a resolution calculation unit.

In step S604, the processing unit 213 compares the resolution at the feature points calculated in step S603 with a threshold that has been recorded in advance. If the resolution at the feature points is higher than the threshold, the processing unit 213 determines that the calibration sheet 109 is in the high-resolution region, and if not, the processing unit 213 determines that the calibration sheet 109 is in the low-resolution region.

In step S605, the processing unit 213 determines whether or not all of the extracted feature points are included within the high-resolution region. If the processing unit 213 determines that all of the extracted feature points are included within the high-resolution region, the processing for step S607 is executed.

If the processing unit 213 determines that any of the extracted feature points is not included in the high-resolution region, the processing for step S606 is executed.

In step S606, the processing unit 213 displays a warning indicating which feature point is outside of the high-resolution region to the user on the display device 215. Consequently, the user can know how the calibration sheet 109 deviates from the high-resolution region. Then, the process returns to step S600.

In step 607, the processing unit 213 causes the image combining unit 212 to combine the images that were captured by the adjacent imaging devices based on the positions of the extracted feature points, performs combining processing on all of the image data, and generates a surrounding image.

In step S608, the processing unit 213 causes the display device 215 to display the surrounding image that was generated in step S607.

Note that, in the second embodiment, the processing for step S503 of the first embodiment may also be executed to display a marker, and the user may also place the calibration sheet 109 at a position where the marker is displayed.

In the second embodiment, whether or not the calibration sheet is included in the high-resolution region is calculated based on the captured image using the processing flow that was described above. Consequently, it is possible to construct a more accurate surrounding view display device by combining the image data that was captured at high resolution into one surrounding image.

Although the present invention has been described in detail based on the preferred embodiments thereof, the installation positions and the numbers of the peripheral high-resolution imaging devices 200 and the central high-resolution imaging devices 206 are not limited to the positions and numbers that have been described in this embodiment, and can be suitably selected and changed.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the display control device and the like through a network or various storage media. Then, a computer (or a CPU, an MPU, or the like) of the display control device and the like may be configured to read and execute the program. In such a case, the program and the storage medium storing the program configure the present invention.

In addition, the present invention includes embodiments realized using at least one processor or circuit configured to perform the functions of the embodiments that were explained above. For example, a plurality of processors may be used for distribution processing to perform the functions of the embodiments that were explained above.

This application claims the benefit of priority from Japanese Patent Application No. 2023-218673, filed on December 25, 2023, which is hereby incorporated by reference herein in its entirety.

**Claims**

1. A display control device comprising:

   at least one processor or circuit configured to function as:
   an image acquisition unit configured to acquire images from a plurality of imaging units each configured to capture an optical image having a low-resolution region and a high-resolution region;
   an image combining unit configured to combine the images to generate a peripheral image; and
   a display control unit configured to display high-resolution regions of the plurality of imaging units in a superimposed manner on the peripheral image.

2. The display control device according to Claim 1,

   wherein the at least one processor or circuit is further configured to function as a determination unit configured to determine that a calibration index is imaged in the high-resolution region, and
   wherein the determination unit determines the high-resolution region based on camera information that has been set in advance.

3. The display control device according to Claim 2,

   wherein the at least one processor or circuit is further configured to function as a feature point extraction unit configured to extract a feature point of the calibration index from the image, and
   wherein the determination unit determines whether or not the feature point is imaged in the high-resolution region.

4. The display control device according to Claim 2, wherein if the determination unit determines that the feature point is not imaged in the high-resolution region, the display control unit displays a warning.

5. A determination device comprising:

   at least one processor or circuit configured to function as:
   an image acquisition unit configured to acquire images from a plurality of imaging units each configured to capture an optical image having a low resolution region and a high resolution region;
   an image combining unit configured to combine the images to generate a peripheral image; and
   a determination unit configured to determine whether or not a resolution of a calibration index included in the captured image is greater than a predetermined value.

6. The determination device according to Claim 5, wherein the at least one processor or circuit is further configured to function as

   a feature point extraction unit configured to extract a feature point of the calibration index from the captured image; and
   a resolution calculation unit configured to calculate a resolution of the feature point.

7.  A display control method comprising:

    acquiring images from a plurality of imaging units each configured to capture an optical image having a low-resolution region and a high-resolution region;
    combining the images to generate a peripheral image; and
    performing display control of displaying high-resolution regions of the plurality of imaging units in a superimposed manner on the peripheral image.

8.  A non-transitory computer-readable storage medium configured to store a computer program comprising instructions for executing the following processes:

    acquiring images from a plurality of imaging units each configured to capture an optical image having a low-resolution region and a high resolution region;
    combining the images to generate a peripheral image; and
    performing display control so as to display high-resolution regions of the plurality of imaging units in a superimposed manner on the peripheral image.

9.  A determination method comprising:

    acquiring images from a plurality of imaging units each configured to capture an optical image having a low-resolution region and a high-resolution region;
    combining the images to generate a peripheral image; and
    determining whether or not a resolution of a calibration index included in the captured image is greater than a predetermined value.

10. A non-transitory computer-readable storage medium configured to store a computer program comprising instructions for executing the following processes:

    acquiring images from a plurality of imaging units each configured to capture an optical image having a low-resolution region and a high-resolution region;
    combining the images to generate a peripheral image; and
    determining whether or not a resolution of a calibration index included in the captured image is greater than a predetermined value.

FIG. 1

FIG. 2

EP 4 578 736 A1

# FIG. 3A

# FIG. 3B

FIG. 4A

FIG. 4B

401b

401a

IMAGE HEIGHT y
[mm]

HALF ANGLE
OF VIEW θ
[deg.]

θ a    θ max

## FIG. 5

START

S500
ACQUIRE INFORMATION ABOUT CAMERA POSITION, CAMERA ANGLE, ANGLE OF VIEW, HIGH-RESOLUTION REGION, AND LOW-RESOLUTION REGION FROM IMAGING DEVICE INFORMATION OF EACH IMAGING DEVICE

S501
ACQUIRE IMAGE DATA BY IMAGING USING FRONT, REAR, LEFT, AND RIGHT IMAGING DEVICES

S502
DISPLAY IMAGES CAPTURED BY IMAGING DEVICE SIDE BY SIDE ON DISPLAY DEVICE

S503
DISPLAY MARKER AND THE LIKE IN SUPERIMPOSED MANNER ON POSITION WHERE HIGH-RESOLUTION REGIONS OVERLAP BETWEEN ADJACENT IMAGING DEVICES

S504
EXTRACT FEATURE POINTS ON CALIBRATION SHEET AFTER USER PLACES CALIBRATION SHEET

S505
ARE ALL THE EXTRACTED FEATURE POINTS WITHIN HIGH-RESOLUTION REGION?

NO

YES

S507
COMBINE IMAGES BETWEEN ADJACENT IMAGING DEVICES BASED ON EXTRACTED FEATURE POINTS

S506
DISPLAY WARNING ON DISPLAY DEVICE FOR FEATURE POINTS OUTSIDE OF HIGH-RESOLUTION REGION

S508
DISPLAY COMBINED SURROUNDING IMAGE ON DISPLAY DEVICE

END

# FIG. 6

START

S600

ACQUIRE VIDEOS BY CAPTURING IMAGES USING FRONT, REAR, LEFT, AND RIGHT SIDE IMAGING DEVICES

S601

DISPLAY IMAGES CAPTURED BY IMAGING DEVICE SIDE BY SIDE ON DISPLAY DEVICE

S602

DETECT FEATURE POINTS ON CALIBRATION SHEET PLACED BY USER BASED ON CAPTURED VIDEO

S603

CALCULATE RESOLUTIONS AT FEATURE POINTS THAT HAVE BEEN IMAGE CAPTURED BY COMPARING DIMENSIONS OF CALIBRATION SHEET USED AND DETECTED FEATURE POINTS

S604

DETERMINE THAT CALIBRATION SHEET IS IN HIGH-RESOLUTION REGION IF CALCULATED RESOLUTION AT EACH FEATURE POINT IS EQUAL TO OR HIGHER THAN THRESHOLD, AND DETERMINE THAT CALIBRATION SHEET IS IN LOW-RESOLUTION REGION IF CALCULATED RESOLUTION IS EQUAL TO OR LOWER THAN THRESHOLD

S605

ARE ALL THE EXTRACTED FEATURE POINTS IN HIGH-RESOLUTION REGION?

NO

YES

S607

COMBINE IMAGES BETWEEN ADJACENT IMAGING DEVICES BASED ON EXTRACTED FEATURE POINTS

S606

DISPLAY WARNING ON DISPLAY DEVICE FOR FEATURE POINTS OUTSIDE OF HIGH-RESOLUTION REGION

S608

DISPLAY COMBINED SURROUNDING IMAGE ON DISPLAY DEVICE

END

FIG. 7

FIG. 8

Europäisches
Patentamt

European
Patent Office

Office européen
des brevets

## EUROPEAN SEARCH REPORT

**Application Number**

EP 24 22 2811

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/094232 A1 (SAITO TADANORI [JP] ET AL) 30 March 2023 (2023-03-30)<br>* abstract *<br>* figures 1, 2A-B, 3, 4, 5, 11A-C, 12 *<br>* paragraph [0031] *<br>* paragraph [0034] *<br>* paragraph [0044] *<br>* paragraph [0048] *<br>* paragraph [0072] - paragraph [0078] *<br>* paragraph [0084] *<br>* paragraph [0080] *<br>* paragraph [0100] - paragraph [0104] *<br>* paragraph [0132] - paragraph [0133] *<br>* paragraph [0156] - paragraph [0162] *<br>----- | 1-10 | INV.<br>B60R1/00<br>B60R1/20<br>B60R1/22<br>B60R1/23<br>G02B3/04<br>G02B3/10<br>G02B13/06<br>G06T3/4038<br>G06T3/4053<br>H04N17/00<br>H04N23/63<br>H04N23/90<br>H04N23/95 |
| X | US 2018/160052 A1 (AIHARA MASAYUKI [JP] ET AL) 7 June 2018 (2018-06-07)<br>* abstract *<br>* figures 2, 5, 6 *<br>* paragraph [0041] *<br>* paragraph [0049] - paragraph [0057] *<br>----- | 1,7,8 | |
| A | US 2012/007985 A1 (INUI YOJI [JP] ET AL) 12 January 2012 (2012-01-12)<br>* abstract *<br>* paragraph [0153] - paragraph [0157] *<br>----- | 3,6 | **TECHNICAL FIELDS SEARCHED (IPC)**<br><br>H04N |

The present search report has been drawn up for all claims

| Place of search | Date of completion of the search | Examiner |
|---|---|---|
| Munich | 29 April 2025 | Furlan, Silvano |

EPO FORM 1503 03.82 (P04C01)

## ANNEX TO THE EUROPEAN SEARCH REPORT
## ON EUROPEAN PATENT APPLICATION NO.

EP 24 22 2811

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2025

| Patent document cited in search report | | Publication date | Patent family member(s) | | Publication date |
|---|---|---|---|---|---|
| US 2023094232 | A1 | 30-03-2023 | CN | 115883984 A | 31-03-2023 |
| | | | US | 2023094232 A1 | 30-03-2023 |
| US 2018160052 | A1 | 07-06-2018 | EP | 3319306 A1 | 09-05-2018 |
| | | | JP | 6459016 B2 | 30-01-2019 |
| | | | JP | WO2018016305 A1 | 19-07-2018 |
| | | | US | 2018160052 A1 | 07-06-2018 |
| | | | WO | 2018016305 A1 | 25-01-2018 |
| US 2012007985 | A1 | 12-01-2012 | CN | 102356633 A | 15-02-2012 |
| | | | EP | 2416570 A1 | 08-02-2012 |
| | | | JP | 4636346 B2 | 23-02-2011 |
| | | | JP | 2010239412 A | 21-10-2010 |
| | | | KR | 20110116243 A | 25-10-2011 |
| | | | US | 2012007985 A1 | 12-01-2012 |
| | | | WO | 2010113673 A1 | 07-10-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 01028250 A

- JP 2023218673 A